# EUROPÄISCHE PATENTSCHRIFT

(11) **EP 1 239 189 B1**
(45) Veröffentlichungstag und Bekanntmachung des Hinweises auf die Patenterteilung: **16.08.2006**
(21) Anmeldenummer: 02004828.6
(22) Anmeldetag: 02.03.2002
(51) Int. Cl.: F16H 57/02, F16K 24/00

(54) **Be- und Entlüftungsvorrichtung, spritzwassergeschützt, für Getriebegehäuse, vorzugsweise in Kraftfahrzeugen**
Spray water protected venting device for gear boxes, especially for motor vehicles
Dispositif d'aération protégé contre les projections d'eau pour boîte de vitesses, en particulier pour véhicule automobile

(30) Priorität: 09.03.2001 DE 10111241
(43) Veröffentlichungstag der Anmeldung: 11.09.2002
(73) Patentinhaber: MAN Nutzfahrzeuge Aktiengesellschaft, 80976 München (DE)
(72) Erfinder: Springer, Hanns, Dipl.-Ing.(FH), 81245 München (DE)

(56) Entgegenhaltungen:
- EP-A- 0 377 067
- EP-A- 0 417 344
- EP-A- 1 067 276
- EP-B- 0 430 958
- DE-A- 19 523 454
- DE-B- 2 838 395
- GB-A- 2 157 586
- US-A- 5 205 848
- US-A- 6 058 969

## Beschreibung

Die Erfindung betrifft eine Vorrichtung nach dem Oberbegriff des Anspruches 1. Eine solche Vorrichtung ist aus der EP 0 430 958 B1 bekannt.

Aus der DE 195 23 454 A1 ist eine Be- und Entlüftungsvorrichtung für Getriebe und Achsen bekannt. Die Be- und Entlüftung geschieht dort durch jeweils einen separaten Kanal, in welchen jeweils ein entsprechend angeordnetes und vorgespanntes Ventil für eine Be- bzw. Entlüftung des Gehäuses sorgt. Bei der Belüftung, also dem Lufteinlaß an der Vorrichtung, ist ein luftdurchlässiges Abdeckglied, das für Flüssigkeiten nicht durchlässig (impermeabel) ist, vorgesehen. Die Vorrichtung erfüllt die heutigen Anforderungen nicht mehr, da z. B. das Auslaßventil der Vorrichtung direkt an die Umgebung entlüftet und angesammeltes Öl nach dem Ventilsitz (in Strömungsrichtung gesehen) an die Umgebung abgegeben wird. Weiterhin ist das waagrecht angeordnete luftpermeable Abdeckglied in der Anordnung nicht vorteilhaft da z. B. angesammeltes, schmutzhaltiges Wasser, wenn die Ansammlung öfters geschieht und dazwischen eine Trocknung erfolgt, das Abdeckglied verstopft. Die Vorrichtung dürfte deshalb eher für den leichten Fahrzeugeinsatz in sauberen Gebieten geeignet sein

Aus der EP 1 067 276 A1 ist eine Vorrichtung für die Entlüftung eines Kurbelgehäuses einer Brennkraftmaschine bekannt. Das aus einem Kurbelgehäuse austretende, mit Öl und Verbrennungsgasen (aus blow-by) behaftete Gas strömt in eine Eintrittskammer vor einem Filter. Am Filter werden die Ölpartikel abgeschieden und in eine Ölsammelkammer des Entlüfter geleitet. Bei einem entsprechenden Unterdruck im Kurbelgehäuse und/oder entsprechend hohem Ölstand in der ölsammelkammer öffnet ein einseitig wirkendes Ventil in der Nähe des Bodens der Ölsammelkammer, so dass das sich angesammelte Öl in das Kurbelgehäuse zurückfließen kann. Das Gas, das durch den Filter strömt, wird in die Luftansaugleitung, des Verbrennungsmotors geleitet

Die Vorrichtung ist eine Entlüftungsvorrichtung während des Motorbetriebes und eine Belüftungsvorrichtung bei abgestelltem Motor, wenn dieser abkühlt wobei gefilterte und wassernebelfreie, Luft aus der genannten Luftansaugleitung angesogen wird. Diese Vorrichtung wäre vor allem wegen der Baugröße und der Herstellkosten für Getriebe-Be- und -Entlüftungen ungeeignet

Auf dem Markt käufliche "Gewindeentlüfter" beinhalten nur ein doppelwirkendes Ventil und kein Filter. Sie scheiden deshalb für den Einsatz im Kraftfahrzeug aus.

Das Problem der ungenügenden Be- und Entlüftung mit Eindringen von Wasser tritt hauptsächlich bei Baustellenfahrzeugen auf. Früher sind die Baustellenfahrzeuge einfach von der Baustelle auf die öffentlichen Straßen gefahren. Herausfliegende Steine aus Reifenprofilen und eine Schmutzfahne von der Baustelle weg auf den öffentlichen Straßen waren eine Gefahr für den Straßenverkehr.

Heute müssen Fahrzeuge, bevor sie von der Baustelle herausfahren, mit Wasser bzw. Hochdruckreiniger gesäubert werden. Durch diese Maßnahme werden z. B. vorher hochbelastete und erwärmte Getriebegehäuse, wie Achsgetriebe, mit Spritzwasser beaufschlagt und abgekühlt, und dies mehrmals am Tag.

Aber auch Baustellenfahrzeuge in schwerem Einsatz haben ähnliche Probleme, wenn z. B. bei Durchfahrt durch Schlamm und Wasserstellen das Achsgetriebe abgekühlt wird.

Weiterhin müssen lebensmittelbefördernde Fahrzeuge meistens täglich mit Hochdruckreinigem gesäubert werden.

Die heute am Markt kaufbaren Be- und Entlüfter für (Getriebe-)Gehäuse sind diesen Anforderungen nicht gewachsen.

Wenn aber die Be- und Entlüftung nicht funktioniert, kann dies zum Umklappen von Dichtlippen, z. B. an den Achsstummeln, führen, wodurch die Dichtwirkung dieser Dichtungen nicht mehr gegeben ist. Geringe Mengen von Wasser oder Schmutzwasser können hier zur Zerstörung des Getriebes führen.

Aufgabe der Erfindung ist es, eine sichere Be- und Entlüftung von Getriebegehäusen in Kraftfahrzeugen zu schaffen und daher Eindringen von Wasser zu verhindern mit einer möglichst hohen Standzeit.

Die Aufgabe wird erfindungsgemäß durch die Merkmale des Anspruches 1 gelöst.

Dadurch, dass die Be- und Entlüftungsvorrichtung eine selbstständige Einheit ist und zugetrennt vom Getriebegehäuse anbringbar ist, eine gaspermeable, senkrecht angeordnete Membrane aufweist und zum Schutz der Membrane und zum Schutz vor zu großem Über-oder Unterdruck ein doppelwirkendes Ventil in einem Bypass angeordnet ist, wird eine gute Wirkung, und eine lange Standzeit der Vorrichtung sowie eine Sicherheit vor zu großen Druckunterschieden im Getriebegehäuse erreicht.

Weiterhin ist ein Abschlussdeckel vor der Membrane und beabstandet zu dieser angebracht, der den direkten Zutritt von Spritz- und Schwallwasser verhindert.

Der Deckelrand des Abschlussdeckels hat mindestens eine Ausnehmung, die mit den Ablaufkanälen in Wirkverbindung steht und einen Luftspalt mit dem Gehäuse bildet. Durch diesen Spalt kann die Luft aus dem Getriebegehäuse entweichen bzw. es kann Luft für dasGetriebegehäuse angesaugt werden, wenn das Getriebegehäuse abkühlt. Außerdem muss durch den genannten mindestens einen Spalt die abgeschiedene Wasserpartikelanhäufung aus der Luft, die von der Membrane abgeschieden wird, ablaufen können

Der Deckelrand des Abschlussdeckels kann aber auch mehrere Ausnehmungen haben, z. B. drei Ausnehmungen, die im unteren Teil des Abschlussdeckels (unterhalb der horizontalen Mittellinie) sein müssen, und es müssen dazu äquivalente Ablaufkanäle geschaffen sein, so dass über diese Kanäle und den entsprechenden Luftspalten zwischen Deckel und Gehäuse Wasser ablaufen kann. Die Sicherheit gegenüber dem Zusetzen eines solchen Spaltes ist damit erhöht.

Das Gehäuse der Vorrichtung weist einen Bund auf, auf dem der Abschlussdeckel aufbringbar ist. Die Ausnehmungen auf dem Deckelrand dürfen nur winkelorientiert einbaubar sein. Mit Hilfe einer Nase, die axial am Bund des Gehäuses verläuft und in die nur eine weitere Ausnehmung am Deckelrand passen darf, ist ein richtiger Einbau des Abschlussdeckels sichergestellt.

Die Vorrichtung ist stapelbar verschraubbar. Dieses Merkmal bringt sehr viele Vorteile, weil mehrere Getriebegehäuse, angeordnet an unterschiedlichen Orten, be- und entlüftbar sind, wobei die gestapelten Vorrichtungen an einer Stelle angeordnet sind. Beispielsweise können zwei angetriebene Hinterachsen, wie dies bei Baustellenfahrzeugen nahezu die Regel ist, mit zwei Be- und Entlüftungsvorrichtungen, die an einer Stelle des Fahrzeuges angebracht sind und über zwei Schlauchleitungen, die zu den Achsen führen, be- und entlüftet werden.

Es können aber auch mehrere Getriebe/Achsen zu einem Be- und Entlüfter geführt werden.

Weiterhin könnten mit zwei an einer Stelle angebrachten Vorrichtungen beispielsweise eine angetriebene Vorderachse und ein Schaltgetriebe be- und entlüftet werden

Diese Anordnung hat Montagevorteile und man kann die Vorrichtungen in einem von Spritz-und Schwallwasser etwas geschützten Fahrzeugbereich anbringen.

Der Abschlussdeckel ist vorzugsweise auf das Gehäuse der Vorrichtung über eine radiale Erhebung auf dem Bund des Gehäuses aufdrückbar befestigbar. Dies hat den Vorteil, dass in Verbindung mit der erwähnten Nase auf dem Bund des Gehäuses, ein winkelorientierter Einbau sichergestellt ist und ein Verdrehen des Abschlussdeckels nicht möglich ist.

Der Abschlussdeckel ist mit dem Gehäuse aber auch verschweißbar. Der Abschlussdedkel ist nur durch Zerstörung desselben entfernbar

In der Zeichnung ist ein Ausführungsbeispiel der Erfindung schematisch dargestell.

Es zeigen:
- Fig. 1: eine Schnittdarstellung,
- Fig. 2: eine Ansicht
- Fig. 3: eine Anordnung der Be- und Entlüftungsvorrichtung.

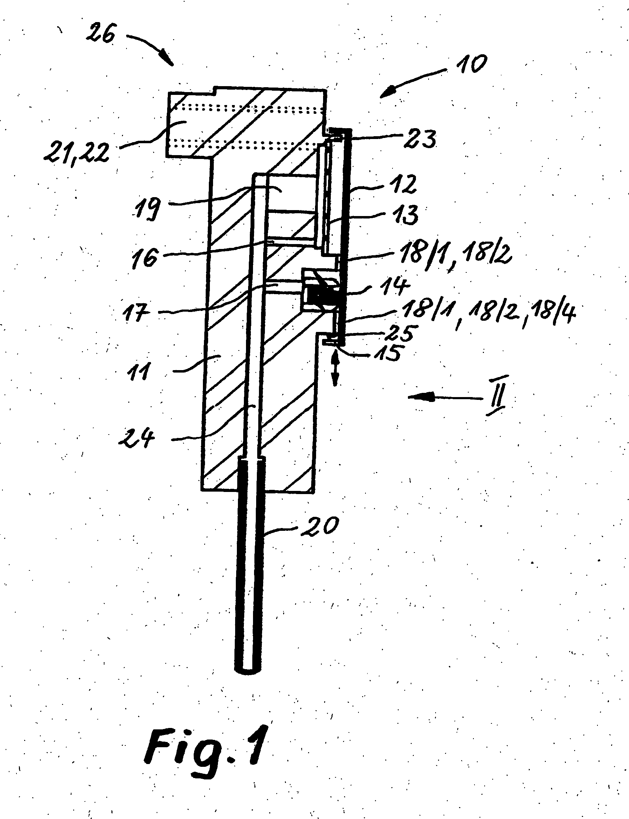

Die Fig. 1 zeigt eine Schnittdarstellung der Be- und Entlüftungsvorrichtung 10. Die Schlauchleitung 20 ist an einem Ende mit einem Klemmstück (nicht gezeichnet) mit dem Gehäuse 11 und am anderen Ende mit dem zu entlüftenden Getriebegehäuse 30 verbunden. Austretende Luft, die mit Ölpartikeln aus dem Getriebe 30 angereichert ist, strömt in der Schlauchleitung 20 in die Bohrung 24 der Vorrichtung 10 und weiter in der Bohrung 19 zur Membrane 13, durch die nur die Luft hindurch kann. Partikel die in der genannten Luft sind, werden durch die Membrane 13 aufgehalten und fließen in den unteren Bereich der Membrane 13, wo die Partikelanhäufung als Öl über die Bohrung 16 wieder zurück in das Getriebegehäuse 30 fließt.

Die Luft, die durch die Membrane 13 hindurchgeströmt ist, gelangt über die Kanäle 18/1, 18/2, 18/4 und über die Öffnung 15, die ein Teil der Ausnehmung (nicht gezeichnet) am Rand des Abschlussdeckels 12 ist, in die Umgebung.

Wenn bei einem Waschvorgang am Fahrzeug das Achsgetriebe 30 abkühlt, muss Luft aus der Umgebung in das Achsgetriebe 30 strömbar sein. In diesem Fall wird Luft aus der Umgebung, die beispielsweise Schmutzwasserpartikel enthält, über die Öffnung 15 angesaugt und gelangt durch die Kanäle 18/1, 18/2, 18/4 vor die Membrane 13.

An der Membrane 13 werden die Schmutzwasserpartikel abgeschieden und fließen als Schmutzwasser zurück durch die Kanäle 18/1, 182, 18/4 und durch die Öffnung 15 an die Umgebung. Die reine Luft kann durch die Membrane 13 hindurch und gelangt so zum Getriebegehäuse 30.

Der Abschlussdeckel 12 hat am Deckelrand mindestens eine Ausnehmung, die mit dem Bund 23 des Gehäuses 11 die Öffnung 15 bildet.

An dem Bund 23 ist eine radiale Erhebung 25 gebildet, über die der Abschlussdeckel 12 aufdrückbar ist. Eine axiale Nase (nicht gezeichnet) rastet in eine weitere Ausnehmung des Deckelrandes ein, womit der Abschlussdeckel 12 winkelorientiert einbaubar ist, so dass die gebildete Öffnung 15 nach unten weist.

Das doppelwirkende Ventil 14 öffnet, falls die Membrane 13 zugesetzt ist, die untere Dichtlippe bei Überdruck im Getriebegehäuse 30 und bei Unterdruck im Getriebegehäuse 30 die obere Dichtlippe. Das Ventil 14 ist beispielsweise ein Gummiformteil. Der Bypass ist der Kanal 18/3 und die Bohrung 17. Das Ventil 14 hat auf der dem Abschlussdeckel 12 zugewandten Seite eine große Ausschrägung, so dass Luft und Partikel um das Ventil herum in den Kanal 18/3 und umgekehrt strömen können.

Die Membrane 13 ist eingeklebt eingeschweißt oder so fest aufgedrückt, dass die sich mit dem Gehäuse 11, wenn dies z. B. ein Thermoplast ist, verbindet. Durch den Ansatz 26 ist die Vorrichtung 10 mit einer oder mehreren weiteren stapelbar anbringbar.

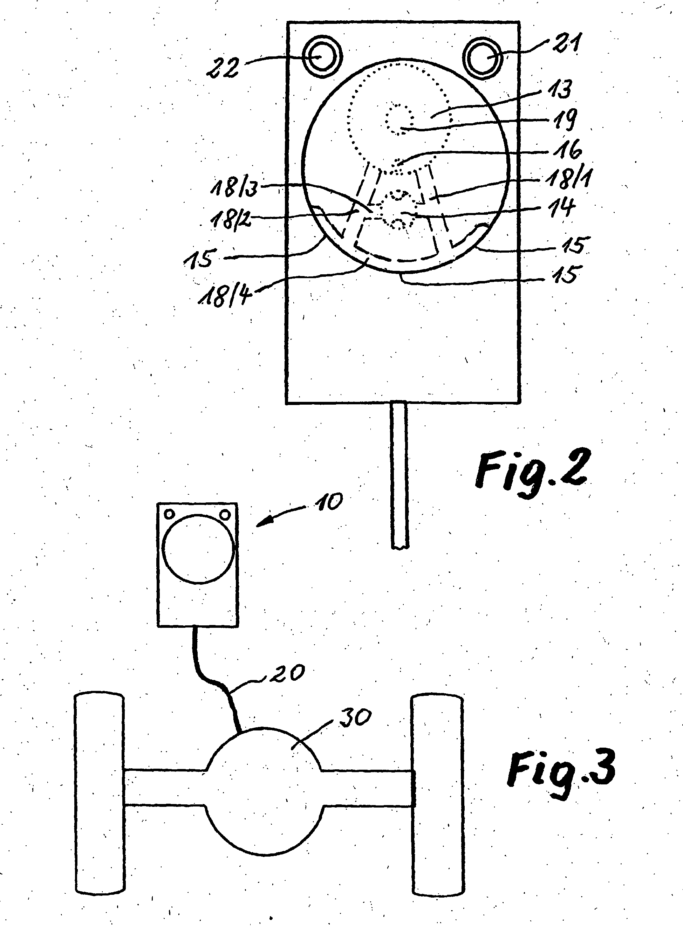

Die Fig. 2 zeigt die Ansicht II aus der Fig. 1. Über die Bohrungen 21 und 22 ist die Vorrichtung 10 z. B. am Fahrzeugrahmen befestigbar. Es sind auch mehrere Verrichtungen hintereinander über die Bohrungen 21, 22 stapelbar anbringbar.

Die Fig. 3 zeigt, wie beispielsweise die Anordnung Achsgetriebe 30, Schlauchleitung 20 und die Be- und Entlüftungsvorrichtung 10 zu wählen ist.

## Patentansprüche

1. Be- und Entlüftungsvorrichtung (10) für Getriebegehäuse in Kraftfahrzeugen, wobei die Vorrichtung eine in Einbaulage senkrecht angeordnete Membrane (13), die der Ölraum eines Getriebegehäuse (30) von der äußeren Umgebung trennt und die luftdurchlässig aber für Partikel in der Luft undurchlässig ist, aufweist und getriebegehäuseseitig gegenüber der Membrane (13) einen Sammelkanal für abgeschiedenes Öl bzw eine abgeschiedene Flüssigkeit hat bei der ein Abschlussdeckel (12) einen direkten Zutritt von Spritzwasser oder, Schwallwasser zur Membrane (18) verhindert, **gekennzeichnet durch** folgende Merkmale
a) die Vorrichtung (10) ist eine separate Baueinheit, die über eine elastische Rohrgehäuse verbinabar leitungsverbindung (20) mit dem Getriebegehäuse (30) ist, verbindbar ist,
b) die von der Membrane (13) von der Umgebungsluft abgeschiedene Anhäufung von Partikeln, beispielsweise aus Wasserstaub, bzw. zurückgehaltene Flüssigkeit läuft in Ablaufkanälen (18/1, 18/2, 18/4) ab,
c) der Deckelrand des Abschlussdeckels (12) weist mindestens eine Ausnehmung auf, die im eingebauten Zustand des Deckels einen Luftspalt (15) bildet, der in Wirkverbindung mit den Ablaufkanälen (18/1, 18/2, 18/3, 18/4) steht,
d) zum Schutz vor zu hohem Über- oder Unterdruck im Getriebegehäuse (30) **durch** die zugesetzte Membrane (13) und zum Schutz vor dem Zerreißen der Membrane (13), ist ein doppelwirkendes Ventil (14) in einem Bypass (17, 18/3) angeordnet,
e) das Gehäuse der ße-und Entlüftungsvorrichtung (11) weist auf einem Bund (23), auf dem der Abschlussdeckel (12) aufbringbar ist, eine Nase zum winkelorientierten Einbau des Deckels auf, so dass in der vorgesehenen Einbaulage der Vorrichtung der Abfluss der Partikelanhäufung möglich ist.

2. Vorrichtung nach Anspruch 1, **dadurch gekennzeichnet, dass** die Vorrichtung (10) stapelbar verschraubbar ist.

3. Vorrichtung nach Anspruch 1, **dadurch gekennzeichnet, dass** der Abschlussdeckel (12) vorzugsweise über eine radiale Erhebung (25) am Bund (23) des Gehäuses der ße- und Entlüftungsvorrichtung (11) aufdrückbar befestigbar ist.

4. Vorrichtung nach Anspruch 1, **dadurch gekennzeichnet, dass** der Abschlussdeckel (12) nur durch Zerstörung desselben entfernbar ist.

## Claims

1. Breather device (10) for a gearbox housing in motor vehicles, whereby the device features a perpendicularly installed diaphragm (13) separating the oil chamber of a gearbox housing (30) from the outer periphery, being permeable to air, but non-permeable to particles in the air and has, on the gearbox housing opposite the diaphragm (13), a collector duct for separated oil and for separated fluid and an end cover (12) preventing direct access of splashwater to said diaphagm (13), **characterised by** the following features:
a. the device (10) is a separate constructional unit that can be connected to the gearbox housing (30) via an elastic pipe connection (20),
b. the accumulation of particles, eg water dust or retained fluid, separated by the diaphragm (13) from the ambient air drains off in drain channels (18/1, 18/2, 18/4),
c. the cover rim of the end cover (12) features at least one recess which when the cover is installed forms an air gap (15) which is in working connection with the drain channels (18/1, 18/2, 18/3, 18/4),
d. a double-acting valve (14) is arranged in a bypass (17, 18/3) to provide protection against the pressure in the gearbox housing's (30) being excessively high or low as a result of the diaphragm's (13) being clogged up and against said diaphragm's (13) being torn apart,
e. the housing (11) of the breather device features a lug which is located on a collar (23), to which the end cover (12) can be fitted and is designed for the angle-oriented installation of the cover (12), so that the particle accumulation can drain off if the device (10) is in the envisaged installation position.

2. Device according to Claim 1, **characterised in that** the device (10) can be screwed into place in a stackable manner.

3. Device according to Claim 1, **characterised in that** the end cover (12) can be fastened by being pressed into place, preferably via a radial elevation (25) on the collar (23) of the housing (11) for the breather device (10).

4. Device according to Claim 1, **characterised in that** the end cover (12) can be removed only by being destroyed.

## Revendications

1. Dispositif d'aération et de purge d'air (10) pour carters de réducteur de véhicules à moteur, auquel cas le dispositif est pourvu d'une membrane (13) disposée verticalement en position de montage, qui sépare la chambre d'huile d'un carter de réducteur (30) de son environnement extérieur et qui laisse passer l'air, mais pas les particules contenues dans l'air, et est pourvu, côté carter de réducteur en face de la membrane (13), d'un conduit collecteur pour l'huile séparée ou pour un fluide séparé, ainsi que d'un couvercle d'obturation (12) empêchant que des projections ou des jets d'eau aient un accès direct à la membrane (13), **caractérisé par** les caractéristiques suivantes :
a) Le dispositif (10) est un ensemble séparé, qui peut être relié au carter de réducteur (30) par l'intermédiaire d'une tuyauterie élastique (20).
b) Les particules accumulés que la membrane (13) a séparées de l'air ambiant, par exemple de l'embrun, ou le fluide retenu s'écoulent dans des conduits d'écoulement (18/1, 18/2, 18/4).
c) Le bord du couvercle d'obturation (12) présente au moins un creux qui forme, lorsque le couvercle est monté, un entrefer (15) qui est en liaison active avec les canaux d'écoulement (18/1, 18/2, 18/4).
d) Une soupape à double effet (14), disposée dans une conduite by-pass (17, 18/3), sert de protection contre une surpression ou une dépression élevée dans le carter de réducteur (30) résultant du colmatage de la membrane (13) et de protection contre la déchirure de la membrane (13).
e) Le carter (11) du dispositif d'aération et de purge d'air présente sur une collerette (23), sur laquelle le couvercle d'obturation (12) doit être placé, un ergot permettant de poser le couvercle à l'angle prévu pour que les particules accumulés puissent s'écouler dans la position de montage prévue.

2. Dispositif selon la revendication 1, **caractérisé en ce que** le dispositif (10) peut être vissé de manière empilable.

3. Dispositif selon la revendication 1, **caractérisé en ce que** le couvercle d'obturation (12) peut être fixé par pression sur la collerette (23) du carter du dispositif d'aération et de purge d'air (11), de préférence par l'intermédiaire d'une bosse radiale (25).

4. Dispositif selon la revendication 1, **caractérisé en ce que** le couvercle d'obturation (12) ne peut être enlevé qu'en le détruisant.
